# EUROPÄISCHE PATENTSCHRIFT

(11) **EP 1 997 606 B1**
(45) Veröffentlichungstag und Bekanntmachung des Hinweises auf die Patenterteilung: **18.08.2010**
(21) Anmeldenummer: 08009749.6
(22) Anmeldetag: 28.05.2008
(51) Int. Cl.: B29C 47/02, B29C 47/20, B29C 47/22, B29D 30/70

(54) **Extruder und Verfahren zur Herstellung von Streifen**
Extruder and process of manufacturing bands
Extrudeuse et procédé de fabrication de bandes

(30) Priorität: 01.06.2007 DE 102007025508
(43) Veröffentlichungstag der Anmeldung: 03.12.2008
(73) Patentinhaber: VMI - AZ Extrusion GmbH, 93486 Runding (DE)
(72) Erfinder: Fischer, Florian W., 85560 Ebersberg (DE)
(74) Vertreter: Baronetzky, Klaus

(56) Entgegenhaltungen:
- US-A- 3 183 135
- US-A- 4 283 241
- US-A- 4 484 966

## Beschreibung

Die Erfindung betrifft einen Extruder, insbesondere für die Extrusion von Kappenstreifen, sowie ein entsprechendes Verfahren.

Es ist bekannt geworden, mit Festigkeitsträgern versehene Streifen über Kalander herzustellen. Ein Beispiel hierfür lässt sich der DE 23 16 981 entnehmen. Bei einer entsprechenden Breite der Bahnen entstehen mehrere Nachteile, insbesondere wenn die mit den Festigkeitsträgern versehenen Streifen recht dünn sein sollen. Zum einen ist ein erheblicher Spaltdruck erforderlich, der entsprechend massiv ausgeführte Lager für die Kalanderrollen bedingt. Dennoch besteht die Gefahr einer Walzendurchbiegung, so dass die Schichtstärke ungleich wird. Hierzu sind verschiedene Maßnahmen bekannt, beispielsweise die aus der genannten Druckschrift ersichtliche Bombage der Walzen. Dennoch kann es zur Verschiebung der Festigkeitsträger kommen, die dann die erwünschte Festigkeit der zu erzeugenden Streifen beeinträchtigt.

Diese Probleme vergrößern sich, wenn die Breite der Kalanderwalzen zur Steigerung des Durchsatzes erhöht wird. Die Parallelität der Festigkeitsträger lässt sich dann noch schlechter kontrollieren, so dass es auch bereits vorgeschlagen worden ist, Zwischenlager zu realisieren, um die Durchbiegung der Kalanderrollen zu reduzieren.

Dennoch ist diese Art der Herstellung ausgesprochen aufwendig.

Dementsprechend sind auch alternative Herstellverfahren für derartige Bahnen in Betracht gezogen wurden. Hierbei ist insbesondere die Realisierung über einen Querspritzkopf zu nennen, wozu beispielhaft auf die DE 34 38 648 zu verweisen ist. Bei einer derartigen Lösung lässt sich der Strang von Festigkeitsträgern besser positionieren, und die Relativlage innerhalb der extrudierten Bahn ist besser festgelegt. Der Extrusionskopf muss bei dieser Lösung jedoch ausgesprochen präzise gebaut werden, zumal er auch sehr hohen Extrusionsdrücken von beispielsweise 400 bar standhalten muss. Zudem ist die Anzahl der gleichzeitig herstellbaren Streifen durch die Kopfbreite stark eingeschränkt.

Das Dokument US 4 283 241 offenbart ein anderes alternatives Herstellungsverfahren sowie Vorrichtung.

Daher liegt der Erfindung die Aufgabe zugrunde, einen Extruder gemäß dem Oberbegriff von Patentanspruch 1 zu schaffen, sowie ein entsprechendes Verfahren gemäß dem Oberbegriff von Patentanspruch 14, die dazu in der Lage sind, Streifen günstig und in guter Qualität herzustellen, auch wenn diese Festigkeitsträger aufweisen.

Diese Aufgabe wird erfindungsgemäß durch Patentansprüche 1 und 14 gelöst. Vorteilhafte Weiterbildungen ergeben sich aus den Unteransprüchen.

Erfindungsgemäß besonders günstig ist es, dass Kappenstreifen für Reifen mit Festigkeitsträgern ausgestattet sein können. Damit können die sogenannten breaker strips eingespart werden, wozu beispielhaft auf die US-A-4,142,568 zu verweisen ist. Die Herstellung derartiger Kappenstreifen mit Verstärkungseinlage scheiterte bislang daran, dass sie vergleichsweise aufwendig und teuer war und aufgrund der unbestimmten Lage der Festigkeitsträger zu wenig zuverlässig realisierbar war.

Erfindungsgemäß ist es demgegenüber möglich, mit der ringförmigen Anordnung der Extruderdüse eine Vielzahl von Streifen gleichzeitig zu extrudieren, aber dennoch eine sichere Zentrallage der Festigkeitsträger zu gewährleisten. Die Festigkeitsträger sind in einem Förderschuh zentral in der radialen Höhenmitte der Düse angeordnet, so dass sie gleichförmig und vollständig von Extrudat umgeben werden. Die Festigkeitsträger werden in an sich bekannter Weise mitextrudiert und laufen in die Extruderdüse ein.

Besonders günstig ist es, wenn die Einführung relativ weit stromab in der Extruderdüse erfolgt, so dass eine im Wesentlichen laminare Strömung des Extrudats besteht und insbesondere keine nennenswerte radiale und auch keine tangentiale Komponente, die die Lage der Festigkeitsträger beeinflussen würde.

Es versteht sich, dass die Festigkeitsträger in an sich bekannter und geeigneter Weise in dem Förderschuh geführt sind. Bevorzugt weisen sie ein geringes Spiel auf, wobei jeder Festigkeitsträger in einem separaten Kanal geführt ist. Durch die Extrusion wird der Festigkeitsträger dann aus dem Förderschuh herausgezogen.

Die Zuführung des Extrusionsmasse zu dem erfindungsgemäßen Extruder kann in an sich bekannter Weise zeitlich, jedoch deutlich stromauf erfolgen. Anschließend an den Zuführungskanal ist ein Ringkanal vorgesehen, der den Extruderdorn umgibt, und zwar über eine Strecke, die beispielsweise etwa dem Durchmesser des Extruderdorns entsprechen kann. Hierdurch lässt sich die Strömung der Extrusionsmasse vergleichmäßigen.

Die mindestens etwa kreisförmige Ausgestaltung der erfindungsgemäßen Extruderdüse erlaubt den Aufbau von erheblichen Drücken, ohne dass - wie beim Querspritzkopf - eine besonders massive Bauweise erforderlich wäre. Beispielsweise lassen sich erfindungsgemäß auch Drücke von beispielsweise 500 bar realisieren, was der Materialverdichtung und der hohen Qualität der extrudierten Streifen zugute kommt.

Dennoch ist der erfindungsgemäße Extruder vergleichsweise leicht zu reinigen, wobei auch die Möglichkeit besteht, den Extruderdorn zu Reinigungszwecken zu entfernen.

In weiterer vorteilhafter Ausgestaltung ist es vorgesehen, die Förderschuhe für die Festigkeitsträger auswechselbar zu realisieren. Hierdurch lässt sich die Art und Anzahl der Festigkeitsträger pro Streifen in weiten Bereichen an die Erfordernisse anpassen.

In weiterer vorteilhafter Ausgestaltung ist es vorgesehen, eine Trennhülse verschieblich zu lagern. Die Trennhülse läuft konisch zu und ermöglicht an ihrem stromab liegenden Ende den Zutritt des Extrudats zu dem Förderschuh. Sie trennt weiter stromauf den Ringkanal für der Extrusionsmasse von dem Förderschuh. Zugleich dient sie der Abdichtung des Ringkanals gegen den Förderschuh nach der Art einer Labyrinthdichtung, wobei es sich versteht, dass dort, also an den Festigkeitsträgern entlang, gegen deren Austrittsrichtung strömende Extrusionsmasse nicht nur in Kauf genommen wird, sondern auch dazu dient, Stopfenbildungen zu vermeiden.

Erfindungsgemäß weist der Extruderdorn anschließend an das vordere Ende der Trennhülse eine Ringvertiefung auf. Dort tritt die Extrusionsmasse ein, so dass sie die radial außerhalb des Bodens der Vertiefung laufenden Festigkeitsträger vollständig umgibt.

Die Vertiefung erstreckt sich über eine nicht unbeachtliche axiale Länge parallel zur Achse des Extruders, so dass eine hochwertige und dicht anschließende Umhüllung der Festigkeitsträger durch das Extrudat gewährleistet ist.

Erfindungsgemäß besonders günstig ist es, dass der Innendruck für den Extrusionskopf selbststabilisierend wirkt, wenn im Wesentlichen eine Kreisform des Extrusionskopfs vorliegt, denn in dieser Konstellation wirken die Innenkräfte des Extrusionskopfs nicht durchbiegend, sondern vergleichmäßigen die Kreisform. Dies stellt einen wesentlichen Vorteil gegenüber einem Querspritzkopf dar.

Erfindungsgemäß besonders günstig ist es ferner, dass mit Förderschuh-Einsätzen den unterschiedlichen Erfordernissen hinsichtlich der Form der Festigkeitsträger Rechnung getragen werden kann. Die Anordnung der Festigkeitsträger, ihre Abmessungen und ihre Anzahl lässt sich so in weiten Bereichen an die Erfordernisse anpassen, wobei es auch möglich ist, mehrere, gegen einander versetzte Schichten von Festigkeitsträgern zu erzeugen.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine schematische Ansicht eines Schnitts durch den Extruderkopf eines erfindungsgemäßen Extruders in einer Ausführungsform;
- Fig. 2: eine vergrößerte Darstellung eines Details aus Fig. 1;
- Fig. 3: einen Längsschnitt durch einen erfindungsgemäßen Extruderkopf; und
- Fig. 4: eine vergrößerte Darstellung eines Details aus Fig. 3.

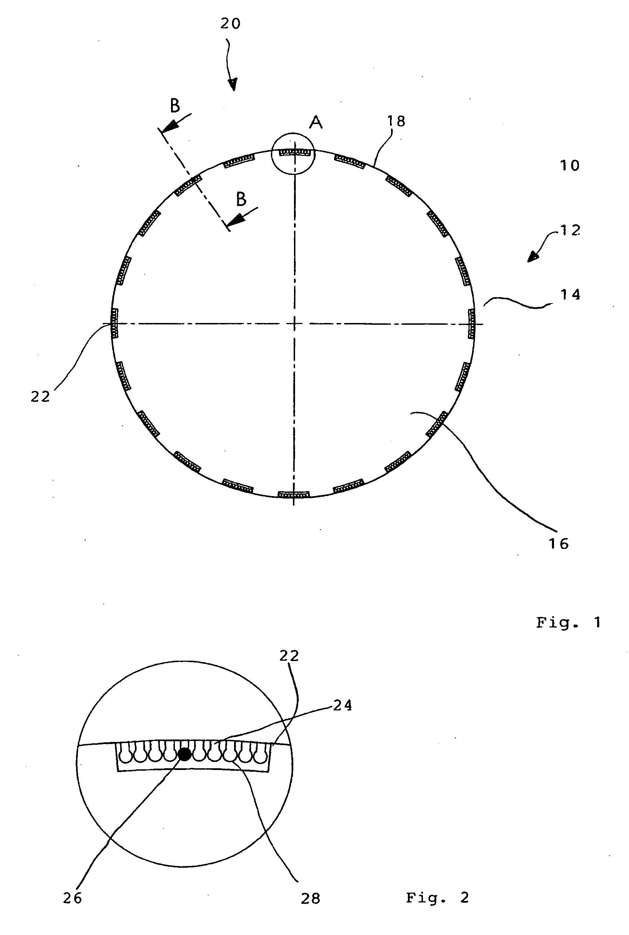

Der in Fig. 1 dargestellte Extruder 10 weist einen Extruderkopf 12 auf, der erfindungsgemäß in besonderer Weise ausgebildet ist. Eine Extruderhülse 14 erstreckt sich um einen Extruderdorn 16. Zwischen diesen besteht ein Dichtspalt 18, der als Extruderdüse 20 wirkt. In Fig. 1 ist ersichtlich, dass sich zahlreiche Förderschuhe 22 oder Festigkeitsträger-Aufnahmen kreisringförming entlang dem Dichtspalt 18 erstrecken. Jeder Förderschuh ist jeweils gemäß der vergrößerten Darstellung in Fig. 2 ausgebildet.

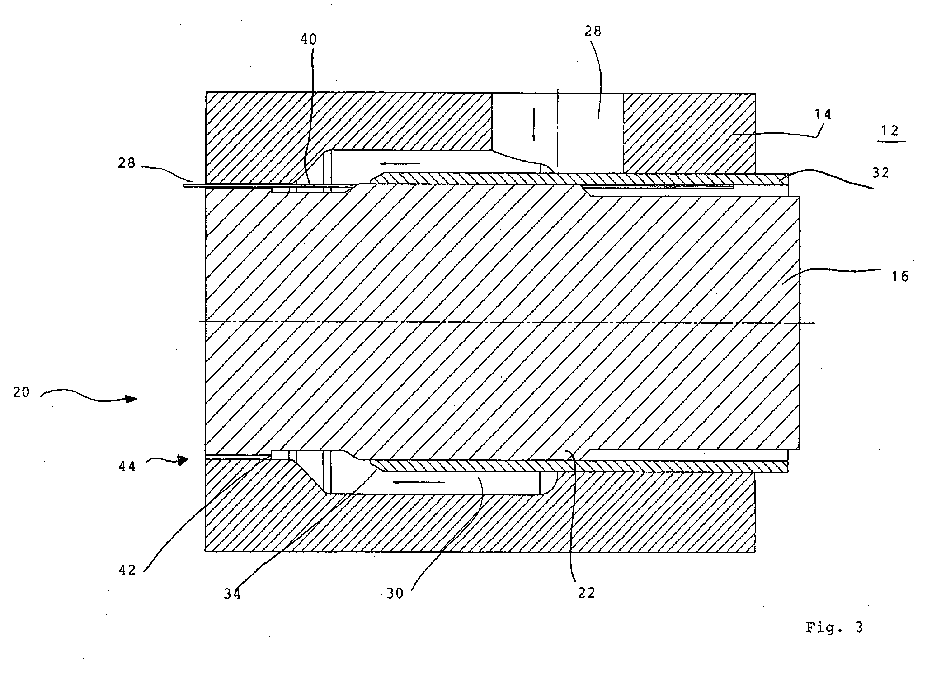

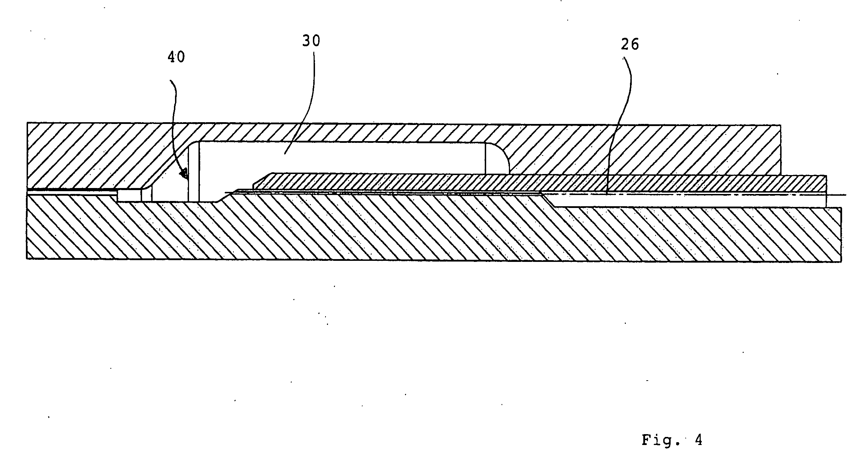

Der Schnitt gemäß Fig. 1 ist im Bereich einer Trennhülse vorgesehen, die aus Fig. 3 und 4 besser ersichtlich ist und die den Ring der Förderschuhe 22 radial nach außen begrenzt. Ein Förderschuh 22 ist aus Fig. 2 in vergrößerter Darstellung ersichtlich. Der Förderschuh weist zahlreiche Kanäle 24 auf, die der Aufnahme von Festigkeitsträger dienen, von denen ein Festigkeitsträger 26 in Fig. 2 dargestellt ist. Jeder Kanal ist im Wesentlichen U-förmig mit einer Ausbauchung 28 an seinem unteren Ende. Dort ist der Festigkeitsträger 26 mit ausreichendem Spiel, das eine Förderung erlaubt, aufgenommen.

In dem dargestellten Ausführungsbeispiel sind die Kanäle 24 mit ganz geringem Abstand nebeneinander angeordnet. Es versteht sich, dass anstelle dessen auch eine beliebige andere Ausgestaltung möglich ist.

Aus Fig. 3 ist ein erfindungsgemäßer Extrusionskopf 12 im Schnitt ersichtlich. Die zu extrudierende Masse 28 wird seitlich, also aus radialer Richtung zugeführt. Sie durchströmt einen Ringkanal 30, der den Extruderdorn 16 umgibt. Dort ist die Ringanordnung der Förderschuhe 22 von einer Trennhülse 32 abgedeckt. Die Trennhülse 32 umgibt den Dorn 16 einschließlich der Förderschuhe für die Festigkeitsträger und bildet die radial einwärts begrenzende Wand für den Kanal 30.

An ihrem vorderen, also stromab liegenden Ende weist die Trennhülse 32 eine Auslaufschräge 34 auf. Die Auslaufschräge dient dazu, die radial einwärts verlaufende Bewegung der zu extrudierenden Masse einzuleiten. Knapp dahinter endet der Förderschuh, und der Extruderdorn 16 weist dort eine Vertiefung 40 auf. Der Festigkeitsträger 26 tritt aus dem Förderschuh 22 frei aus und wird innerhalb der Vertiefung 40 vollständig von der zu extrudierenden Masse 28 umgeben.

Die Vertiefung 40 endet weiter stromab an einer Sperrschulter 42, die einen Ringspalt 44 zu der Extruderhülse 14 belässt, so dass dort die Extrusionsdüse 20 ausgebildet ist. Durch die Extrusionsdüse 20 tritt somit die zu extrudierende Masse 28 zusammen mit den dort eingelagerten Festigkeitsträgern 26 aus.

Diese Realisierung ist aus Fig. 4 noch in vergrößerter Darstellung ersichtlich, wobei der Einfachheit halber der Festigkeitsträger 26 lediglich gestrichelt angedeutet ist. Es ist ersichtlich, dass im Bereich der Vertiefung 40 der Durchmesser des Ringkanals 30 zunächst vergrößert ist. Dort ensteht insofern eine Strömungsberuhigungszone mit etwas veringerter Strömungsgeschwindigkeit, die eine gute Hüllwirkung für die Festigkeitsträger erlaubt.

Während es bevorzugt vorgesehen ist, die Trennvorrichtung integriert in dem Extrusionkopf vorzusehen, in dem nämlich gemäß Fig. 1 jeder Streifen durch einen entsprechenden Steg des Extrusionsdorns von dem benachbarten Streifen getrennt ist, versteht es sich, dass die Trennvorrichtung auch auf andere Weise realisiert werden kann.

Anschließend an die Extrusionsdüse 20 wird die nunmehr extrudierte Masse, in der die Festigkeitsträger realisiert sind, in Streifen geschnitten. Dies kann beispielsweise durch Messer erfolgen, die anschließend an den Ringspalt 44 vorgesehen sind, oder in beliebiger geeigneter anderer Weise, beispielsweise durch Stanzen. Die Trennvorrichtung kann aber auch räumlich beabstandet von dem Extrusionskopf 12 vorgesehen sein, und es ist auch möglich, die extrudierte Masse ungeschnitten und unaufgeteilt zu lagern und die Trennvorrichtung erst dann zum Einsatz zu bringen, wenn die Streifen verwendet werden sollen.

Es versteht sich, dass in an sich bekannter Weise der Extrusionskopf gekühlt werden kann, wobei aus Gründen der einfacheren Darstellung Kühlkanäle in den Figuren nicht dargestellt sind.

In einer weiteren Ausgestaltung ist es vorgesehen, eine noch stärkere Abstützung der Festigkeitsträger gegen seitliche Kräfte zu verwirklichen. Hierzu erstrecken sich genutete Lippen weiter aus dem Formschuh heraus, zwischen denen die Festigkeitsträger laufen. Diese können somit bereits am Beginn der Vertiefung 40 unterspült werden, werden aber dennoch dort noch seitlich geführt. Die Benetzung erfolgt dann zunächst sowohl von unten als auch von oben, und erst später auch seitlich.

Eine weitere bevorzugte Ausgestaltung der Erfindung sieht vor, einen gebogenen Streifen zu extrudieren, der sich beispielsweise während der Extrusion über 300 Grad erstreckt. Auch hier gilt, daß anstelle der Biegefestigkeit des Materials, aus dem der Extruder gebaut ist, auf die - höhere - Zugfestigkeit zurückgegriffen werden kann. Der Streifen kann dann vollständig oder in Teilbereichen mit Festigkeitsträgern ausgestattet sein, und er kann sich im Extremfall bis zu 360 Grad erstrecken, wobei bevorzugt mit der Trennvorrichtung dafür Sorge getragen wird, dass er sich leicht in die flache Streifenform entspannt.

Die erfindungsgemäße Wirkung tritt nur ein, wenn der Streifen sich über deutlich mehr als einen Halbkreis erstreckt, beispielsweise über mindestens 240 oder 280 Grad.

## Patentansprüche

1. Extruder für die Extrusion insbesondere einer Kautschukmischung mit Festigkeitsträgem (26), wobei der Extruder (10) eine im Wesentlichen ringförmige Extrusionsdüse aufweist und eine Trennvorrichtung den extrudierten Ring in mindestens einen Streifen aufteilt,
**dadurch gekennzeichnet, dass** Festigkeitsträger-Aufnahmen oder -Förderschuhe (22) In der Extrusionsdüse vorgesehen sind, über welche je mindestens zwei Festigkeitsträger (26) derart leitbar sind, dass der mindestens eine extrudierte Streifen mindestens einen Festigkeitsträger (26) mittig aufweist.

2. Extruder nach Anspruch 1,
**dadurch gekennzeichnet, dass** die Trennvorrichtung den extrudierten Ring in mindestens zwei Streifen aufteilt.

3. Extruder nach einem der vorhergehenden Ansprüche,
**dadurch gekennzeichnet, dass** die Festigkeitsträger-Aufnahmen oder -Förderschuhe (22) als einseitig offene Kanäle ausgebildet sind.

4. Extruder nach einem der vorhergehenden Ansprüche,
**dadurch gekennzeichnet, dass** jede Festigkeitsträger-Aufnahme mindestens 4, bevorzugt etwa 7 bis 15 und insbesondere etwa 10 Kanäle für die Aufnahme von Festigkeitsträgern (26) aufweist.

5. Extruder nach einem der vorhergehenden Ansprüche,
**dadurch gekennzeichnet, dass** die Festigkeitsträger (26) in tangentialer Richtung der Extrusionsdüse (20) betrachtet voneinander deutlich beabstandet sind, insbesondere um etwas mehr als die Hälfte ihrer tangentialen Breite.

6. Extruder nach einem der vorhergehenden Ansprüche,
**dadurch gekennzeichnet, dass** die Trennvorrichtung den Ring zwischen den Festigkeitsträgern (26) in Streifen aufteilt, wobei jeder Streifen mindestens einen Festigkeitsträger-Strang aufweist.

7. Extruder nach einem der vorhergehenden Ansprüche,
**dadurch gekennzeichnet, dass** der bei der Extrusion mitlaufende Festigkeitsträger (26) in der Extrusionsdüse (20) in Extrusionsmasse eingebettet wird.

8. Extruder nach einem der vorhergehenden Ansprüche,
**dadurch gekennzeichnet, dass** eine Vielzahl von Streifen, insbesondere von mehr als 10 und weniger als 30 und bevorzugt etwa 15 bis 20 Streifen gleichzeitig kreisringförmig hergestellt werden.

9. Extruder nach einem der vorhergehenden Ansprüche,
**dadurch gekennzeichnet, dass** der Extruder (10) mit einem Extrusionsdruck von mehr als 200 bar, insbesondere etwa 400 bar, gefahren wird.

10. Extruder nach einem der vorhergehenden Ansprüche,
**dadurch gekennzeichnet, dass** die Festigkeitsträger (26) sich im Wesentlichen parallel zur Achse zur Extrusionsdüse (20) erstrecken und diese kreisringförmig umgeben.

11. Extruder nach einem der vorhergehenden Ansprüche,
**dadurch gekennzeichnet, dass** die Trennvorrichtung die Streifen mit Trennkanten aufteilt, die sich im Wesentlichen parallel zur Achse der Extrusionsdüse (20) erstrecken.

12. Extruder nach Anspruch 1,
**dadurch gekennzeichnet, dass** der Streifen sich im wesentlichen kreisförmig, über einen Winkel von mehr als 210 Grad, insbesondere mehr als 270 Grad erstreckt.

13. Extruder nach Anspruch 1,
**dadurch gekennzeichnet, dass** der Streifen sich im wesentlichen kreisförmig, über einen Winkel von mehr 360 Grad oder weniger erstreckt, und dass der Streifen insbesondere an mindestens einer Stelle von einer Trennvorrichtung getrennt wird.

14. Verfahren zur Herstellung von Streifen, wobei
eine Mehrzahl von Streifen, die zusammen einen Ring bilden, gemeinsam extrudiert und durch eine Trennvorrichtung aufgeteilt werden, **dadurch gekennzeichnet, dass** jeder extrudierte Streifen mindestens einen Festigkeitsträger (26) mittig aufweist.

## Claims

1. An extruder for the extrusion in particular of a rubber mixture having reinforcements or reinforcing members (26), wherein said extruder (10) comprises a substantially ring-shaped extrusion nozzle, and a separator divides the extruded ring into at least one band;
**characterized in that** reinforcement retainers or reinforcement conveyor shoes are provided in the extrusion nozzle with the aid of which at least two reinforcements (26) are guidable such that the at least one extruded band at least comprises one reinforcement (26) in the centre thereof.

2. The extruder as claimed in claim 1,
**characterized in that** the separator divides the extruded ring into at least two bands.

3. The extruder as claimed in one of the preceding claims,
**characterized in that** the reinforcement retainers or reinforcement conveyor shoes (22) are formed as channels that are open to one side.

4. The extruder as claimed in one of the preceding claims,
**characterized in that** each reinforcement retainer comprises at least 4, preferably approximately 7 to 15, and in particular approximately 10 channels for receiving the reinforcements (26).

5. The extruder as claimed in one of the preceding claims,
**characterized in that** the reinforcements (26), when viewed in the tangential direction of the extrusion nozzle (20), are considerably spaced apart from one another, in particular have a distance of somewhat more than half of the tangential width thereof.

6. The extruder as claimed in one of the preceding claims,
**characterized in that** the separator divides the ring between the reinforcements (26) into bands, each band having at least one reinforcement string.

7. The extruder as claimed in one of the preceding claims,
**characterized in that** the reinforcement (26) that moves along during the extrusion process, is embedded into extrusion compound in the extrusion nozzle (20).

8. The extruder as claimed in one of the preceding claims,
**characterized in that** a plurality of bands, in particular more than 10 and less than 30 and preferably approximately 15 to 20 bands, are simultaneously manufactured in an annular shape.

9. The extruder as claimed in one of the preceding claims,
**characterized in that** the extruder (10) is operated under an extrusion pressure of more than 200 bar, in particular approximately 400 bar.

10. The extruder as claimed in one of the preceding claims,
**characterized in that** the reinforcements (26) substantially extend in parallel to the axis of the extrusion nozzle (20) and surround it in an annular manner.

11. The extruder as claimed in one of the preceding claims,
**characterized in that** the separator divides the bands with the aid of separation edges that substantially extend to the axis of the extrusion nozzle (20) in parallel.

12. The extruder as claimed in claim 1,
**characterized in that** the band substantially extends circularly at an angle of more than 210 degrees, in particular more than 270 degrees.

13. The extruder as claimed in claim 1,
**characterized in that** the band substantially extends circularly at an angle of 360 degrees or less, and **in that** the band is separated at least at one location by means of a separator.

14. A method for producing bands, wherein plural bands forming a ring, are extruded together and are divided by means of a separator, **characterized in that** each extruded band comprises at least one reinforcement (26) in the centre thereof.

## Revendications

1. Extrudeuse pour l'extrusion de préférence d'un mélange de caoutchouc avec des supports de fermeté (26), où l'extrudeuse (10) présente une filière d'extrusion essentiellement annulaire et un dispositif de séparation divise l'anneau extrudé en au moins une bande, **caractérisée en ce que** des logements de supports de fermeté ou des coussinets de transport (22) de la filière dextrusion sont prévues, sur lesquels au moins deux supports de fermeté (26) sont dirigeables de telle manière que ladite au moins une bande extrudée présente au moins un support de fermeté (26) centré.

2. Extrudeuse selon la revendication 1, **caractérisée en ce que** le dispositif de séparation divise l'anneau extrudé en au moins deux bandes.

3. Extrudeuse selon l'une des revendications précédentes, **caractérisée en ce que** les logements des supports de fermeté ou des coussinets de transport (22) sont configurés comme des canaux ouverts sur un côté.

4. Extrudeuse selon l'une des revendications précédentes, **caractérisée en ce que** chaque logement de supports de fermeté présente au moins de préférence environ 7 à 15 et en particulier environ 10 canaux pour accueillir des supports de fermeté.

5. Extrudeuse selon l'une des revendications précédentes, **caractérisée en ce que** les supports de fermeté (26), vus dans le sens tangentiel de la filière d'extrusion (20) sont clairement espacés les uns par rapport aux autres, en particulier par environ un peu plus de la moitié de leur largeur tangentielle.

6. Extrudeuse selon l'une des revendications précédentes, **caractérisée en ce que** le dispositif de séparation divise l'anneau en bandes entre les 2 supports de fermeté (26), où chaque bande présente au moins un brin de support de fermeté.

7. Extrudeuse selon l'une des revendications précédentes, **caractérisée en ce que** le support de fermeté (26) qui est transporté lors de l'extrusion est incorporé dans la filière d'extrusion (20) dans la matière d'extrusion.

8. Extrudeuse selon l'une des revendications précédentes, **caractérisée en ce qu'**une pluralité de bandes, de préférence plus de 10 et moins de 30 et de préférence de 15 à 20 bandes est fabriquée simultanément sous forme d'anneau circulaire.

9. Extrudeuse selon l'une des revendications précédentes **caractérisée en ce que** l'extrudeuse (10) est opérée avec une pression d'extrusion de plus de 200 bar, de préférence d'environ 400 bar.

10. Extrudeuse selon l'une des revendications précédentes **caractérisée en ce que** les supports de fermeté s'étendent essentiellement parallèles à l'axe à la filière d'extrusion (20) et l'entourent en forme d'anneau.

11. Extrudeuse selon l'une des revendications précédentes **caractérisée en ce que** le dispositif de séparation répartit les bandes avec des bords de séparation qui s'étendent essentiellement parallèle à l'axe de la filière d'extrusion (20).

12. Extrudeuse selon la revendication 1, **caractérisée en ce que** la bande s'étend essentiellement circulaire, sur un angle de plus de 210 degrés, en particulier plus de 270 degrés.

13. Extrudeuse selon la revendication 1, **caractérisée en ce que** la bande s'étend essentiellement de façon circulaire, sur un angle de 360 degrés ou moins, et que la bande est séparée en particulier à au moins un endroit par un dispositif de séparation.

14. Procédé pour la fabrication de bandes, où plusieurs bandes, qui forment ensemble un anneau, sont extrudées ensemble et séparées par un dispositif de séparation, **caractérisée en ce que** chaque bande extrudée présente au moins un support de fermeté (26) centré.
